# EUROPEAN PATENT APPLICATION

(11) **EP 4 843 833 A1**
(43) Date of publication of application: **25.11.2026**
(21) Application number: 25226179.7
(22) Date of filing: 22.12.2025
(51) Int. Cl.: B60R 9/06, B60R 13/10

(54) **TILTABLE CARRIER STRUCTURE**

(30) Priority: 22.05.2025 TW 114119223
(71) Applicant: King Rack Industrial Co., Ltd., Taichung City (TW)
(72) Inventor: Wang, Chiu-Kuei, Taichung City (TW); Espesset, Hugues, 81160 Saint-Juéry (FR); Girod, Frédéric, 81160 Saint-Juéry (FR)
(74) Representative: Cabinet Chaillot

(57) **Abstract**

A tiltable carrier structure suitable for the rear of vehicles, and includes a connecting seat (2) for connecting to the trailer ball (1) or connecting tube at the rear end of the vehicle. A fixed seat (3) is connected to the connecting seat and provides support for the carrier. A carrying rack (4) has a frame structure and is rotatably connected to the fixed seat through a pivot mechanism (31; 41). A release mechanism includes a rectangular frame (5) disposed on the carrying rack, a connecting rod (6) linked with the rectangular frame, and a sliding member (61) disposed within the fixed seat, wherein the sliding member slides along an elongated slot (431) to lock or release the tilting function of the carrying rack. Users can manually operate the release mechanism to quickly enter the tilting state, and through the spring structure, the sliding member automatically resets, improving operational convenience and safety.

## Description

### BACKGROUND OF THE INVENTION

### 1. Fields of the invention

The present invention relates to the field of vehicle accessories, and more particularly, to a tiltable carrier structure with flip function, particularly suitable for installation at the rear of vehicles, and can be used for convenient installation, removal, and tilting carrying rack equipment.

### 2. Descriptions of Related Art

Currently, most carriers on the market are of fixed type. When not in use, carriers typically occupy vehicle space. These fixed rack structures usually cannot adjust angles, resulting in carriers causing vehicle space waste in certain situations, and inconvenient installation and use when needed.

Therefore, how to provide an angle-adjustable carrier structure that can provide better flexibility between use and storage, solving the deficiencies of existing technology, has become an urgent problem to be solved.

The present invention intends to provide a tiltable carrier structure with flip function to eliminate the shortcomings mentioned above.

### SUMMARY OF THE INVENTION

The present invention relates to a tiltable carrier structure and comprises a trailer ball, a connecting seat, a fixed seat, a carrying rack, a rectangular frame and a linkage device, wherein the trailer ball is installed on a fixing device at a rear of a vehicle and serves as a support point for the carrying rack.

The connecting seat clamps the trailer ball and fixes the carrier rack at the rear end of the vehicle. The fixed seat is a U-shaped or V-shaped structure, and the connecting seat is connected to a center of the fixed seat to support and fix the carrying rack.

The carrying rack is installed on the fixed seat and is tiltable relative to the fixed seat. The carrying rack has a frame structure and includes a license plate bracket at a front end of the carrying rack.

The fixed seat includes a pivot seat, and the carrying rack includes a pivot portion which is pivotably connected to the pivot seat. The pivot seat and the carrying rack are connected to each other by a pin so that the carrying rack is rotatable or tiltable on the pivot seat.

A tube body is connected to a center of the carrying rack. A fixing element is connected to an upper end of the connecting seat. The carrying rack is fixed to a U-shaped groove of the fixing element. The tube body has a distal end, and the distal end is detachably connected to the fixing element.

The tube body is connected to the rectangular frame which is opposite to the distal end. The linkage device is disposed between the rectangular frame and the distal end. One end of the linkage device is fixed to the license plate bracket. The distal end has an elongated slot, and the linkage device 6 includes a sliding member located in the elongated slot. The sliding member is connected to a spring for reset.

The rectangular frame is connected to the carrying rack through a strap in a locked state. When the strap on the rectangular frame is loosened, the license plate bracket is rotatable, and the license plate bracket is pushed to enable the linkage device to pull the sliding member within the distal end. This causes the distal end of the carrying rack to disengage from the fixing element, so that the carrying rack flips or is adjust its angle.

Preferably, the distal end includes a safety locking device which locks the sliding member in the U-shaped groove when needed, so as to prevent the carrying rack from accidentally flipping during driving.

Preferably, the spring resets the sliding member to an original position of the sliding member, so that when the rectangular frame is not operated, the sliding member always remains in a locked state.

Preferably, a rotation structure is connected between the rectangular frame and the tube body of the carrying rack. The rotation structure includes a rotation seat disposed on the rectangular frame, and a rotation portion disposed at a lower end of the tube body. The rotation seat and the rotation portion are pivotably connected, so as to enable the rectangular frame to rotate relative to the carrying rack.

The primary object of the present invention is to provide a tiltable carrier structure that, through convenient structural design, enables the carrying rack to adjust different tilt angles, achieving flexible carrying and storage functions.

The features and benefits of the present invention are summarized as follows:
1. Tilting function: Through the pivot design and the release mechanism, the carrier can tilt to different angles, facilitating convenient access to items or storage.
2. Quick adjustment: Through the rectangular frame and the connecting rod linkage mechanism, the carrier can be released with single-hand operation without tools, enabling it to quickly enter the tilting state.
3. Secure locking: Combined with a safety locking device, it ensures that the carrier will not become loose or accidentally tilt due to bumps during driving.
4. Automatic reset: The sliding member has a built-in spring, enabling the carrier to automatically return to the locked state when no force is applied, enhancing operational safety.
5. Enhanced operational convenience: Simply by pushing the license plate bracket, the rectangular frame can be rotated for adjustment, suitable for single-person operation.
6. Multiple applications: In addition to serving as a rack for carrying items, it can also be combined with other accessories, such as luggage boxes.

The above benefits and advantages ensure that the "tiltable carrier structure" is superior to traditional designs in terms of practicality, safety, and convenience, making it suitable as a highly competitive product in the market.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the present invention;
Figure 2 is a perspective view of the other side of Figure 1;
Figure 3 is an exploded perspective view of the structure of the present invention;
Figure 4 is a side view of the structure of the present invention;
Figure 5 is a cross-sectional view of the structure of the present invention;
Figure 6 is a usage diagram (1) of the present invention;
Figure 7 is a usage diagram (2) of the present invention;
Figure 8 is a usage diagram (3) of the present invention;
Figure 9 is a usage diagram (4) of the present invention;
Figure 10 is a practical application diagram (1) of the present invention;
Figure 11 is a practical application diagram (2) of the present invention, and
Figure 12: Practical application diagram (3) of the present invention.

### DETAILED DESCRIPTION OF THE PREFERRED EMBODIMENT

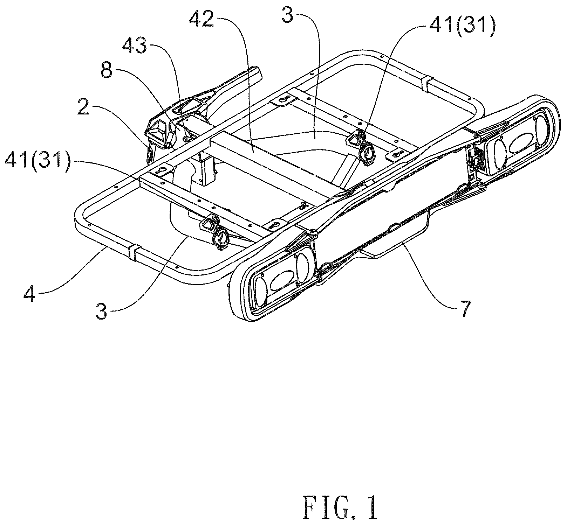

As shown in Figures 1 to 3, the tiltable carrier structure of the present invention comprises a trailer ball 1, a connecting seat 2, a fixed seat 3, a carrying rack 4, a rectangular frame 5, and a linkage device 6. The drawings and description of this case are represented in the form of a trailer ball 1, which can be replaced by a connecting tube 9.

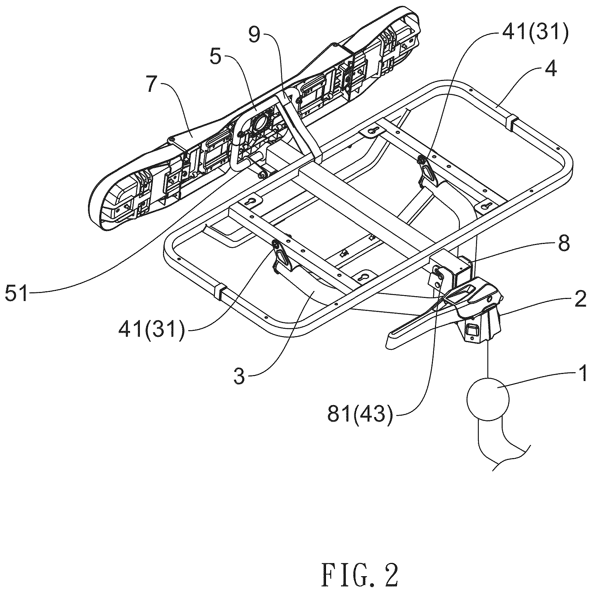

As shown in Figure 2, the trailer ball 1 is installed on a fixing device at the rear of the vehicle, serving as a support point for the carrying rack 4.

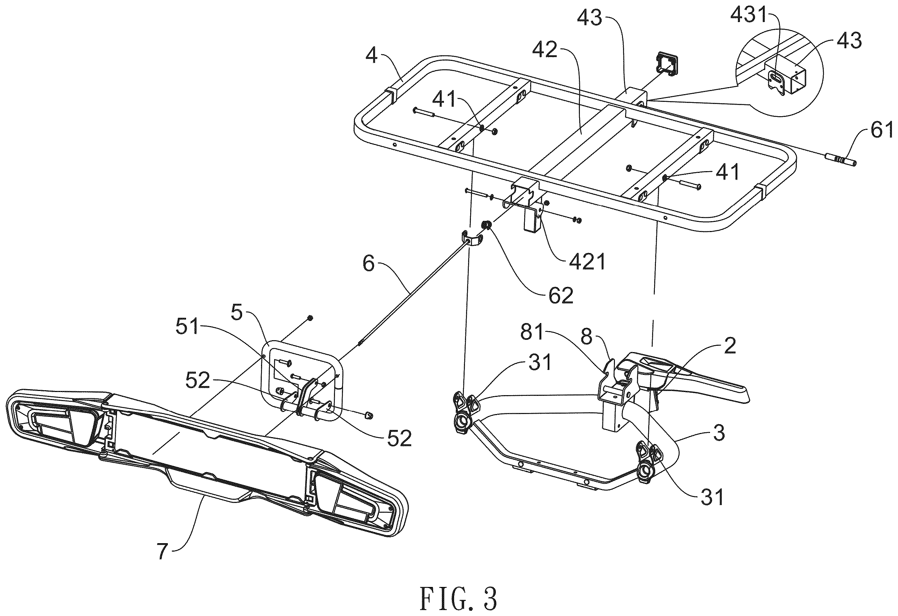

As shown in Figures 2 and 3, the connecting seat 2 is used to clamp the trailer ball 1 to fix the carrying rack 4 at the rear end of the vehicle.

As shown in Figures 1 to 3, the fixed seat 3 is arranged in a U-shaped or V-shaped structure. The connecting seat 2 is connected to a center of the fixed seat 3 so as to support and fix the carrying rack 4.

As shown in Figures 1 to 3, the carrying rack 4 is installed on the fixed seat 3 and can perform tilting movement relative to the fixed seat 3 to achieve angle adjustment. The carrying rack 4 has a frame structure and provides a license plate bracket 7 installed at the front end of the carrying rack 4.

As shown in Figures 1 to 3, the fixed seat 3 is provided with a pivot seat 31, and the carrying rack 4 is provided with a pivot portion 41 at a predetermined position. The pivot portion 41 is pivotably connected to the pivot seat 31, the pivot seat 31 and the carrying rack 4 are connected to each other by a pin so that the carrying rack 4 is rotatable or tiltable on the pivot seat 31.

As shown in Figures 3 to 9, the center of the carrying rack 4 is provided with a tube body 42. The upper end of the connecting seat 2 is provided with a fixing element 8 which has a U-shaped groove 81 for fixing the position of the carrying rack 4. The tube body 42 has a distal end 43 protruding from one side of the carrying rack 4, and the fixing element 8 is detachably connected to the distal end 43. The tube body 42 is provided with a rectangular frame 5 which is located opposite to the distal end 43. The linkage device 6 is disposed between the rectangular frame 5 and the distal end 43. One end of the linkage device 6 is fixed to the license plate bracket 7. The distal end 43 has an elongated slot 431, and the linkage device 6 is provided with a sliding member 61 in the elongated slot 431. The sliding member 61 is connected to a spring 62 for reset.

As shown in Figures 2 and 3, the rectangular frame 5 is connected to the carrying rack 4 through a strap 9 in the locked state, so that the carrying rack 4 has stable support function during transportation.

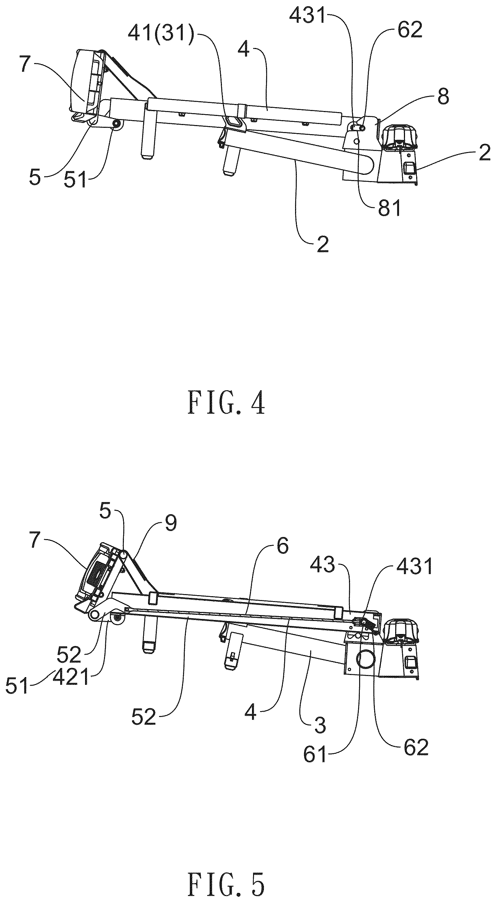

As shown in Figures 4 to 9, when the strap 9 on the rectangular frame 5 is loosened to allow the license plate bracket 7 to rotate, and the license plate bracket 7 is pushed to enable the linkage device 6 to pull the sliding member 61 within the distal end 43. This causes the distal end 43 of the carrying rack 4 to disengage from the fixing element 8, so that the carrying rack 4 flips or is adjust its angle.

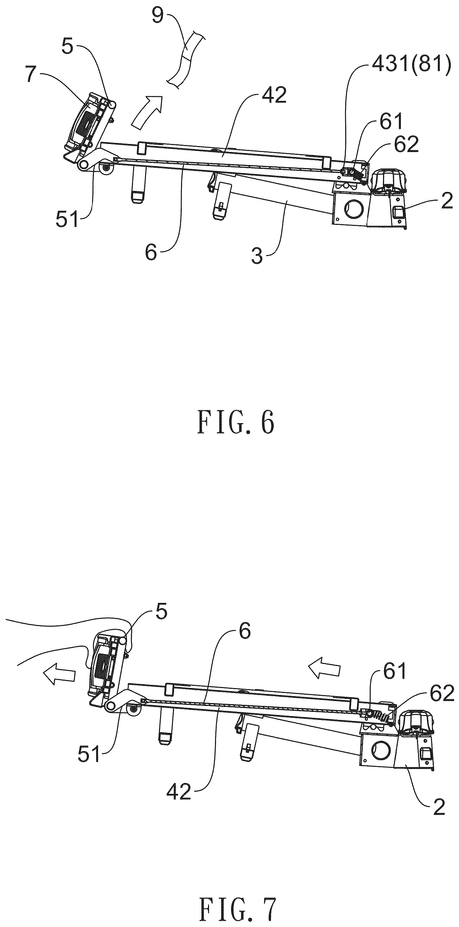

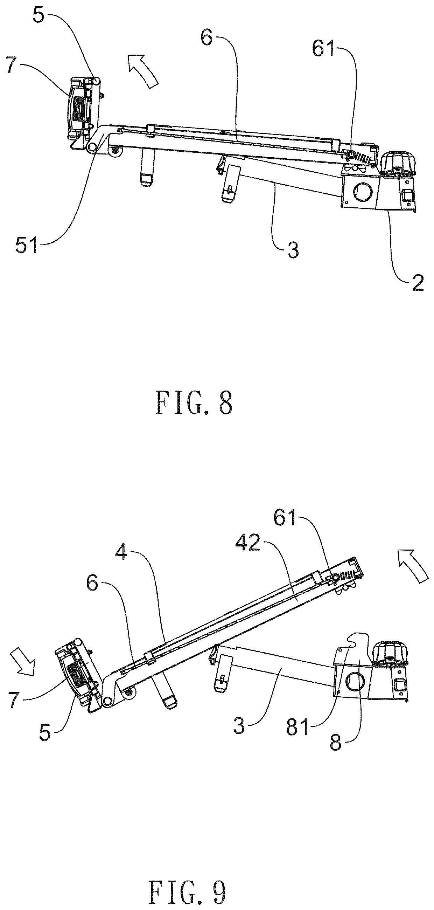

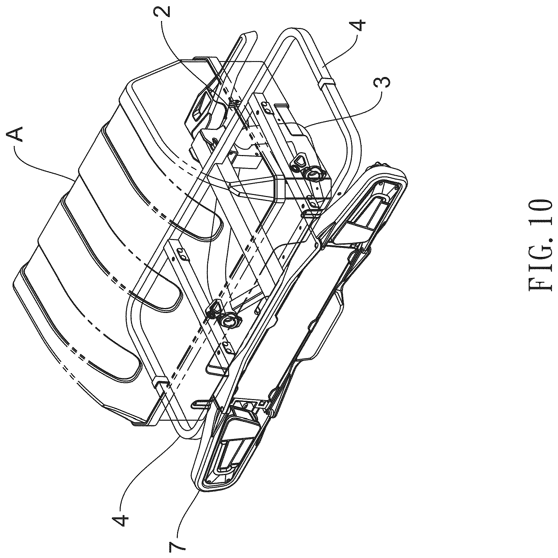

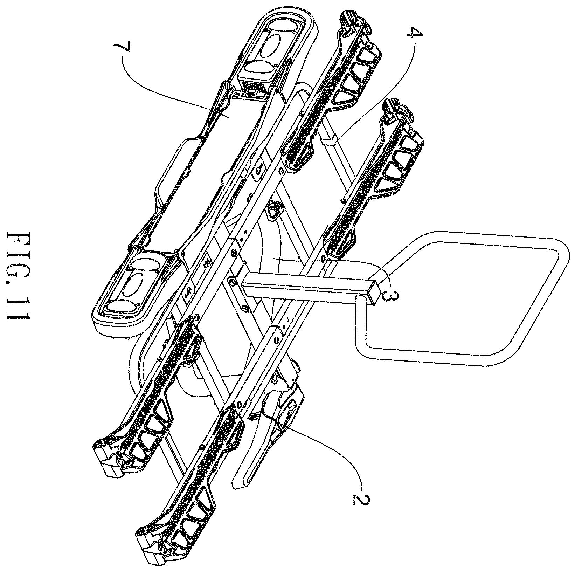

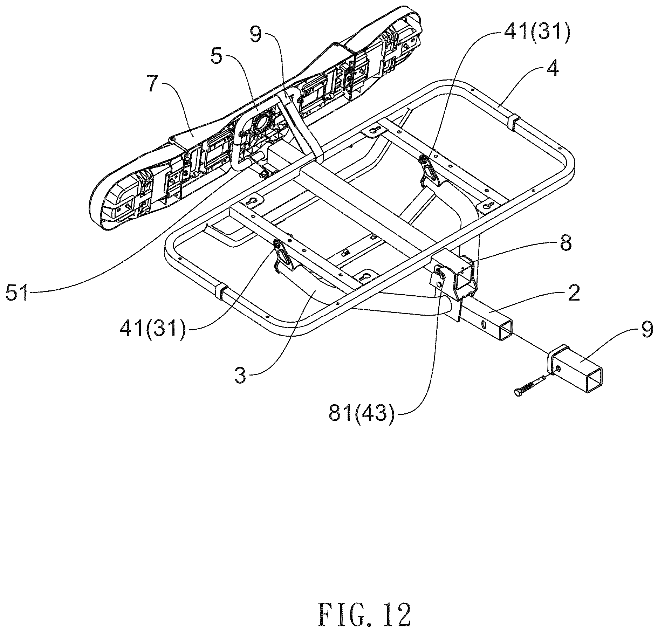

The specific usage methods and achievable benefits of the present invention are introduced.
1. The distal end 43 is provided with a safety locking device (not shown in the figure), which can lock the sliding member 61 in the U-shaped groove 81 when needed, preventing the carrying rack 4 from accidentally flipping during driving.
2. As shown in Figures 3 to 5, a rotation structure 51 is disposed between the rectangular frame 5 and the tube body of the carrying rack 4. The rotation structure 51 includes a rotation seat 52 disposed on the rectangular frame 5, and a rotation portion 421 disposed at the lower end of the tube body 42. The rotation seat 52 and the rotation portion 421 are pivotably connected, enabling the rectangular frame 5 to rotate relative to the carrying rack 4.
3. As shown in Figure 6, when the strap 9 is loosened, it enters a state where tilting adjustment is possible. Then, when the user pushes the license plate bracket 7, the rectangular frame 5 can produce linkage function.
4. As shown in Figure 7, the linkage device 6 can pull the sliding member 61, thereby enabling the sliding member 61 to move along the elongated slot 431 toward the end away from the U-shaped groove 81, allowing the carrying rack 4 to be unlocked. In this state, the spring 62 is stretched and extended.
5. As shown in Figure 8, when the carrying rack 4 leaves the fixing element 8, as shown in Figure 9, the carrying rack 4 can produce flipping or angle adjustment function relative to the fixed seat 3 through the pivot portion 41.
6. In addition to directly placing items on the carrying rack 4, as shown in Figure 10, a luggage box "A" can be installed on the carrying rack 4, or as shown in Figure 11, a bike carrying device "B" can be installed on the carrying rack 4. Accordingly, the structure of the present invention has multiple uses and possesses economic value. Also, as shown in Figure 12, the present invention is also applicable by changing the connecting seat 2 to a square tube form to combine with the connecting tube 9 installed at the rear end of the vehicle, conforming to various configurations.

While we have shown and described the embodiment in accordance with the present invention, it should be clear to those skilled in the art that further embodiments may be made without departing from the scope of the present invention.

## Claims

1. A tiltable carrier structure comprising a trailer ball (1), a connecting seat (2), a fixed seat (3), a carrying rack (4), a rectangular frame (5) and a linkage device (6), **characterized in that**:
the trailer ball (1) is installed on a fixing device at a rear of a vehicle and serves as a support point for the carrying rack (4);
the connecting seat (2) clamps the trailer ball (1) and fixes the carrying rack (4) at the rear end of the vehicle;
the fixed seat (3) is a U-shaped or V-shaped structure, the connecting seat (2) is connected to a center of the fixed seat (3) to support and fix the carrying rack (4);
the carrying rack (4) is installed on the fixed seat (3) and is tiltable relative to the fixed seat (3), the carrying rack (4) has a frame structure and includes a license plate bracket (7) at a front end of the carrying rack (4);
the fixed seat (3) includes a pivot seat (31), the carrying rack (4) includes a pivot portion (41) which is pivotably connected to the pivot seat (31), the pivot seat (31) and the carrying rack (4) are connected to each other by a pin so that the carrying rack (4) is rotatable or tiltable on the pivot seat (31);
a tube body (42) is connected to a center of the carrying rack (4), a fixing element (8) is connected to an upper end of the connecting seat (2), the carrying rack (4) is fixed to a U-shaped groove (81) of the fixing element (8), the tube body (42) has a distal end (43), the fixing element (8) is detachably connected to the distal end (43);
the tube body (42) is connected to the rectangular frame (5) which is opposite to the distal end (43), the linkage device (6) is disposed between the rectangular frame (5) and the distal end (43), one end of the linkage device (6) is fixed to the license plate bracket (7), the distal end (43) has an elongated slot (431), the linkage device (6) includes a sliding member (61) located in the elongated slot (431), the sliding member (61) is connected to a spring (62) for reset, and
the rectangular frame (5) is connected to the carrying rack (4) through a strap (9) in a locked state, when the strap (9) on the rectangular frame (5) is loosened, the license plate bracket (7) is rotatable, and the license plate bracket (7) is pushed to enable the linkage device (6) to pull the sliding member (61) within the distal end (43), causing the distal end (43) of the carrying rack (4) to disengage from the fixing element (8), so that the carrying rack (4) flips or is adjust its angle.

2. The tiltable carrier structure as claimed in claim 1, wherein the distal end (43) includes a safety locking device which locks the sliding member (61) in the U-shaped groove (81) when needed, preventing the carrying rack (4) from accidentally flipping during driving.

3. The tiltable carrier structure as claimed in claim 1, wherein the spring (62) resets the sliding member (61) to an original position of the sliding member (62), so that when the rectangular frame (5) is not operated, the sliding member (61) always remains in a locked state.

4. The tiltable carrier structure as claimed in claim 1, wherein a rotation structure is connected between the rectangular frame (5) and the tube body (42) of the carrying rack (4), the rotation structure includes a rotation seat (52) disposed on the rectangular frame (5), and a rotation portion (421) disposed at a lower end of the tube body (42), the rotation seat (52) and the rotation portion (421) are pivotably connected, enabling the rectangular frame (5) to rotate relative to the carrying rack (4).

5. The tiltable carrier structure as claimed in claim 1, wherein the carrying rack (4) has a luggage box (A).

6. The tiltable carrier structure as claimed in claim 1, wherein the rack (4) has a bike carrying device (B).

7. The tiltable carrier structure as claimed in claim 1, wherein the trailer ball (1) is replaced with a connecting tube (9).
